# DEMANDE DE BREVET EUROPEEN

(11) **EP 0 662 453 A1**
(43) Date de publication de la demande: **12.07.1995**
(21) Numéro de dépôt: 95420004.4
(22) Date de dépôt: 10.01.1995
(51) Int. Cl.: C02F 1/28, B01D 35/26

(54) **Dispositif de purification de fluide et en particulier d'eau**

(30) Priorité: 10.01.1994 FR 9400342
(71) Demandeur: SEB S.A., F-69130 Ecully (FR)
(72) Inventeur: Garrigues, Patrick, F-65260 Pierrefitte-Nestalas (FR); Gabette, Luc, F-65400 Boô-Silhen (FR); Astegno, Jean-Paul, F-64420 Espoey (FR)

(57) **Abrégé**

- Traitement de fluide
- L'invention concerne un appareil de purification de fluide, en particulier d'eau, comportant un réservoir (4) de fluide à traiter associé à un moyen de pompage (3) lui même relié par une entrée (24) à la partie basse (21) d'un moyen de filtration (5), ledit moyen de pompage (3) étant apte à faire circuler le fluide à traiter à travers le moyen de filtration (5) de sa partie basse (21) vers sa partie haute jusqu'à un moyen de distribution (32,33)
   caractérisé en ce qu'il comprend une valve anti-retour (40) pour le fluide à traiter, disposée en amont du moyen de filtration (5), en considérant le sens de circulation du fluide à traiter, de manière à laisser le moyen de filtration (5) en contact permanent avec le fluide à traiter lorsque le moyen de pompage (3) est à l'arrêt.
- Purificateur d'eau

## Description

La présente invention se rapporte au domaine technique général de la purification des fluides, et en particulier d'eau, par passage du fluide à traiter sur un substrat dont les propriétés physico-chimiques assurent le traitement des impuretés contenues dans le fluide.

La présente invention concerne un dispositif de purification de fluides, et tout particulièrement mais non exclusivement un appareil de purification d'eau, comportant un réservoir de fluide à traiter associé à un moyen de pompage apte à faire circuler le fluide à traiter à travers un moyen de filtration de la partie basse dudit moyen vers sa partie haute jusqu'à un organe de distribution du fluide traité.

Il est déjà connu de purifier des fluides, en particulier l'eau de consommation courante, par passage de l'eau sur un substrat assurant une filtration à caractère physico-chimique.

Ainsi il est proposé dans le brevet US-A-3950253 de réaliser un appareil de purification d'eau à usage domestique comportant un réservoir d'eau à traiter dans lequel est disposée une cartouche filtrante destinée à assurer le traitement et la purification de l'eau. L'appareil comporte également une pompe apte à assurer le pompage de l'eau à traiter pour la diriger, par l'intermédiaire d'une tubulure, vers le bas de la cartouche filtrante de manière à faire circuler l'eau à traiter de bas en haut dans la cartouche filtrante. L'eau traitée et purifiée sort ainsi à la partie supérieure de la cartouche filtrante par l'intermédiaire d'un tube de distribution dont l'extrémité débouche dans un récipient amovible intégré dans le corps de l'appareil de purification.

Les matériaux constitutifs de la cartouche filtrante sont constitués de manière connue en soit, d'un mélange de charbon actif additionné de sel d'argent pour combattre les développements bactériens, et de résine échangeuse d'ions. Divers autres constituants peuvent être ajoutés dans la cartouche filtrante en fonction de la présence de composants spécifiques dans l'eau à traiter.

Un tel appareil apporte une solution non négligeable au problème spécifique de la purification et du traitement de l'eau à usage domestique dans un environnement donné. L'eau courante peut en effet être ainsi débarrassée en tout ou partie par le biais de la cartouche filtrante, des principaux agents contaminants de type organique ou inorganique tels que chlore, plomb, pesticides, métaux lourds, nitrates, etc... à l'origine de goûts, odeurs ou couleurs désagréables.

Il s'avère cependant que la purification de l'eau dans un tel appareil n'est pas réalisée de manière complète, et ce quelles que soient la qualité et la nature de la composition formant la cartouche filtrante. En effet, on constate notamment une diminution progressive dans le temps de l'efficacité de la purification liée à la fois au colmatage progressif de la cartouche filtrante d'une part, et à une diminution de l'efficacité intrinsèque de la cartouche en raison d'une baisse de son activité biologique d'autre part. Une telle baisse d'activité peut être mise en relation avec la position verticale de la cartouche filtrante entraînant en cas de période d'inutilisation un assèchement progressif de la cartouche filtrante par évacuation gravitaire de l'eau. Il doit également être constaté que le montage de la cartouche filtrante à l'intérieur même du réservoir de liquide à traiter rend l'opération de changement de la cartouche filtrante délicate, un tel changement nécessitant par ailleurs une série de manipulations difficiles multipliant les zones de contact entre les mains de l'utilisateur et l'appareil. Il devient par conséquent difficile de maîtriser parfaitement l'état de propreté de l'appareil et de lutter efficacement contre le développement de foyers bactériens dans des zones difficilement nettoyables par ailleurs.

L'objet de la présente invention vise en conséquence à porter remède aux différents problèmes énumérés précédemment, et en particulier à réaliser un appareil de purification de fluides, en particulier d'eau, dont le rendement de filtration est amélioré de manière durable pendant toute la durée d'utilisation de la cartouche de filtration à l'aide de moyens particulièrement simples.

Un autre objet de l'invention vise à proposer un appareil de purification de fluides dont l'efficacité et l'activité de la cartouche de filtration est améliorée et dont la durée de vie est prolongée.

Un autre objet de l'invention est de fournir un appareil de purification de fluides dont le maintien de la cartouche filtrante en condition humide est obtenu à l'aide de moyens particulièrement simples n'influençant pas de manière négative le bon écoulement du fluide à travers la cartouche filtrante.

Un autre objet de l'invention est de fournir un appareil de purification de fluides dans lequel le passage du fluide à travers la cartouche filtrante est homogène.

Un autre objet de l'invention est de fournir un appareil de purification de fluides permettant de faciliter le changement de la cartouche filtrante sans manipulation excessive, et sans risque de contamination bactérienne.

Un autre objet de l'invention est de fournir un appareil de purification de fluides dans lequel la distribution du fluide traité est facilitée et susceptible de s'adapter à différents types de récipients.

Les objets assignés à l'invention sont atteints à l'aide d'un appareil de purification de fluides en particulier d'eau, comportant, un réservoir de fluide à traiter associé à un moyen de pompage lui même relié par une entrée à la partie basse d'un moyen de filtration, ledit moyen de pompage étant apte à faire circuler le fluide à traiter à travers le moyen de filtration de sa partie basse vers sa partie haute jusqu'à un moyen de distribution caractérisé en ce qu'il comprend une valve anti-retour pour le fluide à traiter, disposée en amont du moyen de filtration, en considérant le sens de circulation du fluide à traiter, de manière à laisser le moyen de filtration en contact permanent avec le fluide à traiter lorsque le moyen de pompage est à l'arrêt.

D'autres objets et avantages de l'invention seront décrits en détail dans la description qui suit, à la lumière des dessins annexés, fournis à titre explicatif et non limitatif, dans lesquels :
- La figure 1 montre selon une vue de face un exemple d'appareil de purification de fluides conforme à l'invention.
- La figure 2 montre selon une coupe transversale longitudinale effectuée selon la ligne II-II de la figure 1, les détails de réalisation d'un purificateur de fluides conforme à l'invention.
- La figure 3 montre selon une coupe transversale un détail de réalisation d'une valve anti-retour conforme à l'invention.
- La figure 4 montre selon une vue de dessus la valve anti-retour montrée à la figure 3, la position de fermeture de ladite valve.
- La figure 5 montre selon une vue de dessus identique à celle de la figure 4, la position d'ouverture de la valve anti-retour conforme à l'invention.

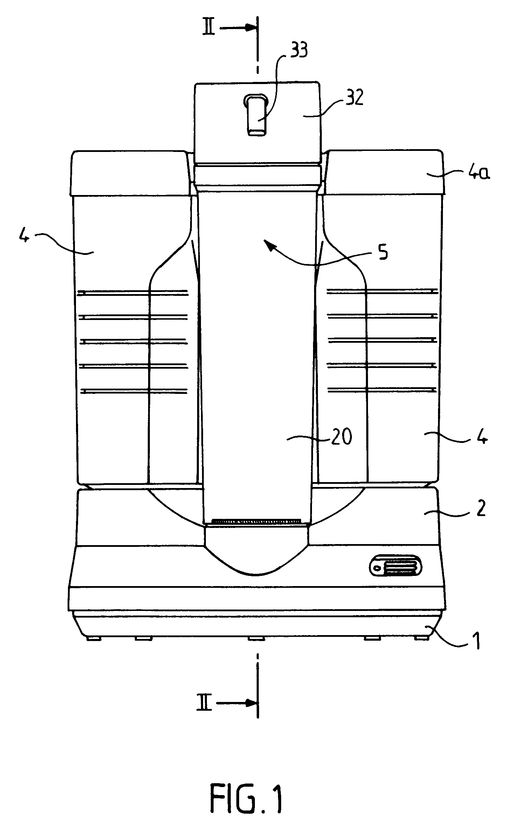

La figure 1 montre selon une vue schématique générale un exemple de réalisation préférentielle d'un appareil de purification de fluide conforme à l'invention constitué d'un appareil de purification d'eau à usage domestique. L'appareil de purification d'eau comporte un bâti principal réalisé en matière plastique incluant une embase 1 sur laquelle est rapportée une coque 2 définissant avec l'embase 1 la partie inférieure de l'appareil. Cette dernière comporte un moyen de pompage 3 destiné à fournir une pression de fonctionnement pour faire circuler le fluide à traiter d'un réservoir 4 de stockage vers un moyen de filtration 5.

Le réservoir 4 est de préférence amovible, disposé au moins en partie à l'arrière du bâti principal de l'appareil, et relié par un système de connexion 6 à un orifice 7 d'alimentation du moyen de pompage 3. Le dispositif de connexion 6 comporte de manière connue un clapet 8 monté mobile élastiquement par l'intermédiaire d'un ressort 9 dans une perforation 7a ménagée dans le fond du réservoir 4. Le clapet 8 est pourvu d'un joint d'étanchéité 9a et monté de manière à dégager la perforation 7a lorsque le réservoir 4 est fixé sur le bâti principal de l'appareil par l'intermédiaire du dispositif de connexion 6. Dans cette position, la perforation 7a est sensiblement au droit de l'orifice 7 pour permettre au fluide à traiter d'être entraîné par le moyen de pompage 3. L'assemblage du réservoir 4 sur le bâti de l'appareil est réalisé par introduction d'une jupe circulaire 12 entourant l'orifice 7a extérieurement au fond du réservoir 4, dans un collier de guidage 13 de diamètre supérieur s'étendant en direction du réservoir 4 à partir du capot 2. Le collier de guidage 13 peut être pourvu d'un joint d'étanchéité et d'un cache joint 14 le recouvrant. Lorsque le réservoir 4 est retiré par l'utilisateur, le montage élastique du clapet 8 permet au joint 9a d'assurer l'étanchéité du réservoir 4.

Selon une variante de réalisation préférentielle, le réservoir 4 est fermé à sa partie supérieure par un opercule 4a de préférence amovible, pourvu d'une ouverture de remplissage permettant de remplir le réservoir 4 sans ôter l'opercule 4a.

Le moyen de pompage 3 est constitué d'un groupe motopompe alimenté en énergie électrique de préférence basse-tension et capable d'assurer un débit moyen de pompage de l'ordre de 1 litre/mn et pouvant varier entre 0,8 et 1,2 litres/mn. Le moyen de pompage 3 est disposé dans le volume interne défini par l'embase 1 et le capot 2 et est relié par une tubulure 15 à un orifice de sortie 16 ménagé dans le capot 2, de préférence sensiblement en face avant du bâti de l'appareil et au droit de l'emplacement réservé au moyen de filtration 5. L'orifice de sortie 16 est entouré à l'extérieur du capot 2 par une jupe de guidage 17, cylindrique et partie intégrante du capot 2.

Le moyen de filtration 5 est constitué par une cartouche 20, de forme sensiblement cylindrique disposée également sensiblement verticalement sur le bâti principal de l'appareil, et apte à être montée de manière amovible sur ledit bâti. La partie basse 21 de la cartouche 20 est constituée par une enveloppe circulaire délimitant une chambre de décantation 22 pourvue dans sa partie centrale interne d'un puits 23, de préférence cylindrique et circulaire, débouchant à l'extérieur par une entrée 24. La mise en place de la cartouche 20 sur le bâti principal de l'appareil s'effectue par enfoncement à force de la partie basse 21 dans une cuvette ménagée dans le capot 2 puis par verrouillage à l'aide par exemple d'un système à baïonnette, le puits 23 étant aligné avec l'orifice de sortie 16, les parois du puits 23 venant s'appuyer sur et entourer la jupe de guidage 17.

Grâce à ce montage la cartouche 20 est rapportée de manière amovible sur l'extérieur du bâti principal, ce qui facilite sa préhension et son changement.

La cartouche 20 comporte de bas en haut un plateau filtrant inférieur 25, par exemple en polypropylène et d'un maillage 20 microns, et un plateau filtrant supérieur 26 de même composition et de même maillage, situé en partie haute de la cartouche 20. Cette dernière est par ailleurs pourvue d'un couvercle 27 de fermeture avec une ouverture 27a sous la forme d'une colonne centrale perforée 28.

Les plateaux filtrants respectivement, inférieur 25 et supérieur 26, sont plus particulièrement destinés à effectuer une filtration mécanique des particules indésirables les plus grosses, alors que le volume interne central de la cartouche 20 située entre les plateaux filtrants 25, 26 est rempli d'une composition filtrante à base d'un mélange de charbon actif, de résine échangeuse d'ions et de particules métalliques chargées de traiter préférentiellement les agents responsables du goût et de l'odeur de l'eau. La composition filtrante est également destinée à assurer le traitement de certains métaux lourds, des pesticides, et à éliminer le chlore, la résine anionique étant plus particulièrement choisie pour éliminer les composés à base de nitrates. A titre indicatif, la cartouche sera constituée d'environ 240 centimètres cubes de résine anionique et de 175 centimètres cubes de charbon actif en grains mordancés à l'argent et de 85 centimètres cubes de particules métalliques à base de cuivre et/ou de zinc par exemple.

Avantageusement il est également possible de prévoir d'interposer entre la composition filtrante et le plateau filtrant supérieur 26, un disque de mousse 30 dont la fonction principale est de limiter le colmatage du plateau filtrant supérieur 26 situé en aval.

A titre de variante, il est également envisageable de prévoir d'incorporer un moyen anti-tartre dans l'appareil et en particulier dans la cartouche 20 même. Ce moyen peut-être une série de billes de silicopolyphosphates vitreux, disposées à la partie supérieure de la cartouche 20 et libérant progressivement et régulièrement au contact de l'eau, des polyphosphates pour obtenir une concentration en phosphore total (P₂ O₅) comprise entre 0,3 et 12 mg / litre et de préférence entre 1 et 5 mg / litre.

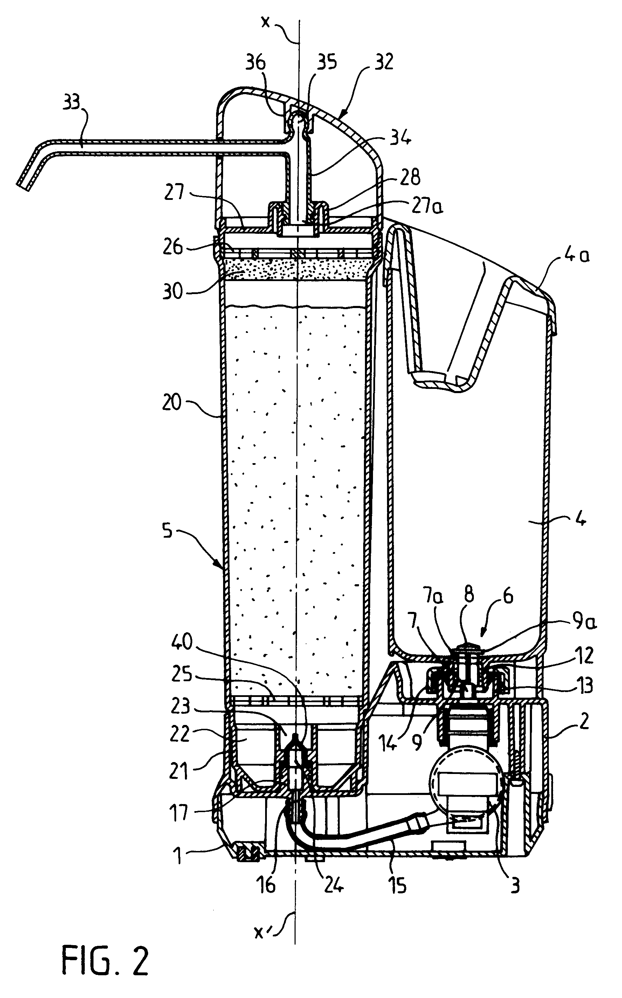

L'extrémité terminale supérieure de la cartouche 20 est constituée par une coiffe 32 pourvue d'un tube verseur 33 débouchant en partie à l'extérieur de la coiffe 32 et comportant une branche de liaison 34 montée à rotation sur la colonne perforée 28. Tel que montrée à la figure 2, la branche de liaison 34 est enfoncée et supportée à rotation autour de l'axe principal x-x' de la cartouche 20, ladite branche 34 étant solidaire de la coiffe 32 par un pion supérieur 35 ancré à force dans un logement 36. La coiffe 32 et le tube verseur 33 constituent ainsi un moyen de distribution orientable.

L'appareil de purification de fluides conforme à l'invention comporte également une valve anti-retour 40 pour le fluide à traiter disposée dans un conduit d'écoulement en amont du moyen de filtration 5, en considérant le sens de circulation du fluide à traiter de manière à laisser le moyen de filtration 5 en contact permanent avec le fluide à traiter lorsque le moyen de pompage 3 est à l'arrêt.

De manière particulièrement avantageuse, la valve anti-retour 40 est de type mécanique, c'est à dire à déplacement, montée à l'entrée 24 du moyen de filtration 5 dans un conduit d'écoulement du fluide, et de préférence dans la chambre de décantation 22. Dans une version particulièrement avantageuse de l'invention, la valve anti-retour 40 est montée dans le puits central 23.

A titre de variante, la valve anti-retour 40 peut également être montée à l'une des deux extrémités de la tubulure 15.

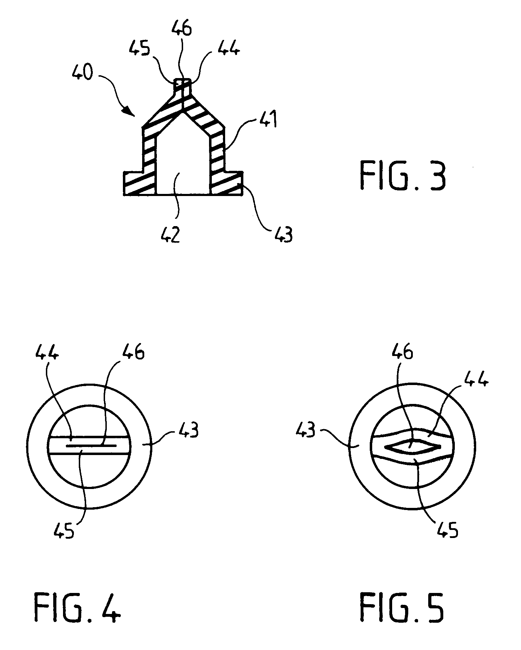

Tel que montré aux figures 3 à 5, la valve anti-retour 40, réalisée en un matériau plastique déformable tel que du silicone de qualité alimentaire, se présente sous la forme d'un corps principal creux 41 sensiblement cylindrique formant une chambre d'arrivée de fluide 42 dont l'extrémité inférieure est pourvue une collerette annulaire externe 43. La valve anti-retour 40 comporte également dans la partie du corps principal creux 41 opposée à la collerette annulaire externe 43, une zone de forme tronconique se terminant par deux lèvres élastiques 44, 45 formant un pincement. Les deux lèvres 44, 45 sont fermées l'une contre l'autre en position de repos et délimitent entre elles une fente de passage 46. Selon un montage particulièrement avantageux, la valve anti-retour 40 est montée sensiblement verticalement en alignement avec l'orifice de sortie 16 et l'entrée 24 formant un conduit d'écoulement, dans le puits central 23 et est maintenue en place par compression de la collerette annulaire externe 43 dans un logement délimité entre la jupe de guidage 17 et l'orifice de sortie 16. La valve anti-retour 40 est montée pour que le fluide dans son sens d'écoulement normal s'écoule dans la chambre d'arrivée 42 et sollicite ensuite par pression les parois de la zone tronconique, puis enfin les lèvres 44. La valve anti-retour 40 est ainsi déformable entre une position de repos élastique dans laquelle le conduit d'écoulement est fermé de manière étanche lorsque le moyen de pompage 3 est à l'arrêt, et une position d'ouverture dans laquelle le conduit d'écoulement est ouvert lorsque le moyen de pompage 3 est en service. En effet la pression du fluide s'écoulant dans la chambre d'arrivée 42 est suffisante pour exercer une pression sur les lèvres 45, 46 qui permet l'ouverture (figure 5) de la fente 46. A l'inverse lorsque le moyen de pompage 3 est à l'arrêt les lèvres 44, 45 reprennent naturellement leur position élastique de repos correspondant à une position de fermeture étanche de la fente 46 (figure 4).

A titre de variante, il est possible d'avoir recours à d'autres valves anti-retour, de type mécanique telles que des vannes à ressort, mobiles entre les deux positions définies précédemment, par rotation, coulissement, etc... Selon l'une de ces variantes de réalisation (non représentée aux figures), la valve anti-retour 40 sera formée d'une bille reposant librement de manière étanche par gravité sur un siège ménagé dans le puits central 23 ou dans l'embase 1 au niveau de l'entrée 24. Il est également envisageable de monter des valves commandées électriquement, telles que des électro-vannes.

Le fonctionnement de l'appareil de purification de fluides conforme à l'invention est le suivant.

L'utilisateur après avoir rempli le réservoir 4 du fluide à traiter et par exemple d'eau provenant du réseau de distribution, met en marche le moyen de pompage 3 lequel assure la mise en circulation de l'eau sous sa pression normale de fonctionnement. La mise en marche peut être assurée par un interrupteur marche/arrêt classique, de préférence pourvu, par mesure de sécurité en particulier, d'un auto shut-off. L'eau passe ainsi à un débit par exemple de l'ordre de 0,8 à 1,2 l/mn du réservoir 4, à travers la tubulure 15 pour atteindre la chambre d'arrivée 42. La pression exercée sur les faces internes des lèvres 44, 45, permet l'ouverture de la fente 46 et le passage de l'eau à traiter dans la partie supérieure du puits 23, puis dans la chambre de décantation 22 qui se rempli. Au cours du remplissage de la chambre de décantation 22 les particules les plus volumineuses peuvent se déposer au fond de la chambre, le remplissage progressif de cette dernière permettant également une répartition homogène de la veine d'eau à traiter sur toute la section de la cartouche 20. Une telle répartition présente l'avantage d'éviter dès la partie basse 21 du filtre, des cheminements préférentiels de l'eau à traiter à travers la composition filtrante ce qui contribue à améliorer la qualité de traitement. L'eau à traiter poursuit ensuite son trajet à travers toute la section de la cartouche 20 jusqu'à la partie supérieure de ladite cartouche, puis chemine à travers le tube verseur 33 jusque vers un récipient de récupération (non montré aux figures).

Dès que l'utilisateur à obtenu la quantité d'eau filtrée nécessaire il arrête le fonctionnement du moyen de filtration 3. Dès lors la pression du liquide est interrompue et la valve anti-retour 40 se ferme immédiatement et automatiquement, les lèvres 44, 45 reprenant leur position élastique de repos correspondant à la fermeture de la fente 46. Toute la colonne d'eau emprisonnée dans le tube verseur 33 et sa branche de liaison 44, ainsi que dans la cartouche 20, peut dès lors demeurer en place, la composition filtrante étant maintenue constamment dès que la pompe 3 est arrêtée, en condition humide.

Il s'avère que le maintien en condition humide constante de la composition filtrante permet aux différents constituants de la composition filtrante de conserver une bonne efficacité gage d'un rendement de filtration amélioré. Par ailleurs le recours à une valve anti-retour 40 déformable mécaniquement par la simple pression de fonctionnement de l'eau est une solution technique simple, à bas coût et d'une grande fiabilité technique.

A titre indicatif la résistance Schore de la valve anti-retour 40 sera de l'ordre de 40 ± 5 Schores.

Selon une variante de réalisation (non représentée aux figures), le couvercle 27 se présente sous la forme d'un tronc de cône définissant, à partir de la colonne perforée 28, des parois inclinées vers la partie basse 21. Une telle disposition facilite l'échappement de l'air vers le haut à travers la colonne perforée 28 et évite, en conséquence le développement de foyers bactériens.

## Revendications

1. Appareil de purification de fluide, en particulier d'eau, comportant un réservoir (4) de fluide à traiter associé à un moyen de pompage (3) lui même relié par une entrée (24) à la partie basse (21) d'un moyen de filtration (5), ledit moyen de pompage (3) étant apte à faire circuler le fluide à traiter à travers le moyen de filtration (5) de sa partie basse (21) vers sa partie haute jusqu'à un moyen de distribution (32,33) caractérisé en ce qu'il comprend une valve anti-retour (40) pour le fluide à traiter, disposée en amont du moyen de filtration (5), en considérant le sens de circulation du fluide à traiter, de manière à laisser le moyen de filtration (5) en contact permanent avec le fluide à traiter lorsque le moyen de pompage (3) est à l'arrêt.

2. Appareil selon la revendication 1 caractérisé en ce que la valve anti-retour (40) est mobile par déformation.

3. Appareil selon la revendication 1 ou 2 caractérisé en ce que la valve anti-retour (40) est mobile entre une position de repos élastique dans laquelle le conduit d'écoulement est fermé de manière étanche lorsque le moyen de pompage (3) est à l'arrêt, et une position d'ouverture dans laquelle le conduit d'écoulement est ouvert lorsque le moyen de pompage (3) est en service.

4. Appareil selon l'une des revendications 1 à 3 caractérisé en ce que la valve anti-retour (40) est montée à l'entrée (24) du moyen de filtration (3).

5. Appareil selon l'une des revendications 1 à 4 caractérisé en ce que la valve anti-retour (40) comporte une fente de passage (46) ménagée entre deux lèvres (44,45) élastiques formant un pincement, les deux lèvres (44,45) étant fermées l'une contre l'autre en position de repos.

6. Appareil selon la revendication 5 caractérisé en ce que la valve anti-retour (40) comporte en amont de la fente (46) un corps principal (41) sensiblement cylindrique formant une chambre d'arrivée de fluide (42).

7. Appareil selon l'une des revendication 1 à 6 caractérisé en ce que la valve anti-retour (40) est montée dans une chambre de décantation (22) de fluide formant la partie basse (21) du moyen de filtration (5).

8. Appareil selon la revendication 7 caractérisé en ce que la chambre de décantation (22) est pourvue d'un puits central (23) dans lequel est disposée la valve anti-retour (40).

9. Appareil selon l'une des revendications 1 à 8 caractérisé en ce que le réservoir (4) de fluide est amovible.

10. Appareil selon l'une des revendications 1 à 9 caractérisé en ce qu'il comporte un bâti principal et un moyen de filtration (5) formé d'une cartouche (20) filtrante rapportée de manière amovible sur l'extérieur du bâti.

11. Appareil selon la revendication 10 caractérisé en ce que la cartouche (20) comporte un couvercle (27) avec une ouverture 27a, ledit couvercle (27) se présentant sous la forme d'un tronc de cône.

12. Appareil selon l'une des revendication 1 à 11 caractérisé en ce que le moyen de filtration (5) comprend une cartouche (20) filtrante comportant de bas en haut un plateau filtrant inférieur (25), un mélange filtrant à base de charbon actif et de résine échangeuse d'ions et un plateau filtrant supérieur (26).

13. Appareil selon la revendication 10, 11 ou 12 caractérisé en ce qu'un filtre mousse (30) est interposé entre le mélange filtrant et le plateau filtrant supérieur (26).

14. Appareil selon l'une des revendications 10 à 13 caractérisé en ce que la cartouche (20) comporte un moyen anti-tartre, formé de billes de silicopolyphosphates.

15. Appareil selon l'une des revendications 1 à 14 caractérisé en ce que le moyen de filtration (5) s'étend sensiblement verticalement.

16. Appareil selon l'une des revendication 1 à 15 caractérisé en ce que le moyen de distribution (32,33) comporte un tube verseur (33) monté sur une coiffe de distribution (32) orientable.

17. Appareil selon la revendication 16 caractérisé en ce que la coiffe de distribution (32) est montée orientable sur la cartouche filtrante (20).
